# EUROPÄISCHE PATENTSCHRIFT

(11) **EP 1 334 890 B1**
(45) Veröffentlichungstag und Bekanntmachung des Hinweises auf die Patenterteilung: **13.09.2006**
(21) Anmeldenummer: 03100173.8
(22) Anmeldetag: 28.01.2003
(51) Int. Cl.: B60S 1/08

(54) **Verfahren zum Betrieb einer Einrichtung zur Steuerung einer Scheibenwischanlage**
Method for operating a control device for a windscreen wiper system
Méthode de fonctionnement d'un dispositif de contrôle d'un système d'essuie-glace

(30) Priorität: 07.02.2002 DE 10204983
(43) Veröffentlichungstag der Anmeldung: 13.08.2003
(73) Patentinhaber: Hella KGaA Hueck & Co., 59552 Lippstadt (DE)
(72) Erfinder: Blaut, Andreas, 59423 Unna (DE); Harren, Rainer, 59557 Lippstadt (DE)

(56) Entgegenhaltungen:
- DE-A- 19 519 891
- DE-A- 19 646 041
- US-A- 5 453 670

## Beschreibung

Die Erfindung bezieht sich auf ein Verfahren zum Betrieb einer Einrichtung zur Steuerung einer Scheibenwischanlage für Fahrzeugscheiben mit einem innerhalb des Wischfeldes der Fahrzeugscheibe angeordneten Regensensor, der in Abhängigkeit von der Feuchtigkeit auf der Fahrzeugscheibe ein Sensorsignal zur Ansteuerung der Scheibenwischanlage generiert. Eine derartige Einrichtung ist beispielsweise aus der EP 0547 337 A1 bekannt. Dabei wird in Abhängigkeit vom Sensorsignal, d.h. in Abhängigkeit vom Grad der Benetzung der Scheibe mit Wasser, der Wischermotor eingeschaltet und die Intervallpause zwischen zwei Wischvorgängen oder die Wischgeschwindigkeit der Scheibenwischanlage variiert.

Insbesondere im Winter gelangt häufig Sprühwasser mit Schmutz und/oder Salz auf die Scheibe, das bei regennasser Fahrbahn von vorausfahrenden Fahrzeugen aufgewirbelt wird. Dabei haben Praxiseinsätze gezeigt, daß ein automatischer Betrieb einer Scheibenwischanlage mit einem Regensensor, bei dem eine Benetzung durch Sprühwasser mit Schmutz und/oder Salz genauso behandelt wird wie eine Benetzung nur mit Wasser, zu einer starken Beeinträchtigung der Sicht führt, da sich aufgrund einer falschen Wischstrategie ein Schmutz- und/oder Salzfilm auf der Scheibe bildet.

Die Schmutz- und/oder Salz-Problematik wird bereits in der US 5,453,670 thematisiert. Dort wird in einer Auswerteeinheit, die Teil der Einrichtung zur Steuerung der Scheibenwischanlage ist, anhand der Sensorsignale des Regensensors das Vorhandensein von Schmutz und/oder Salz auf der Fahrzeugscheibe erkannt. Dabei wird beim Vorhandensein von Schmutz und/oder Salz auf der Fahrzeugscheibe die Intervallpause zwischen zwei Wischvorgängen verlängert oder die Wischgeschwindigkeit erniedrigt. Durch die Verlängerung der Intervallpause oder die Erniedrigung der Wischgeschwindigkeit wird ausreichend Sprühwasser auf der Fahrzeugscheibe gesammelt, um die Scheibe dann beim Wischen tatsächlich auch von Schmutz und/oder Salz zu befreien. Gemäß US 5,453,670 wird zur Erkennung von Schmutz nur der Signalwert der trockenen (und eventuell verschmutzen) Scheibe mit einem Schmutzschwellwert verglichen.

Die Schmutz- und/oder Salz-Problematik wird bereits in der US 5,453,670 thematisiert, wobei dort die Zahl der Signaleinbrüche pro Wischzyklus ausgewertet wird, um Schmutz zu erkennen.

Aufgabe der Erfindung ist es, ein alternatives Verfahren zur Schmutz- und/oder Salzerkennung zu schaffen.

Diese Aufgabe wird durch die kennzeichnenden Merkmale des Anspruches 1 gelöst.
Dabei wird erfindungsgemäß zur Erkennung von Schmutz und/oder Salz das Sensorsignal vor einem Überwischvorgang mit dem Sensorsignal nach dem nächsten oder übernächsten Überwischvorgang des Wischzyklus verglichen, wobei anhand des Vergleichsergebnisses in der Auswerteeinheit entschieden wird, ob Schmutz und/oder Salz vorhanden ist.

In einer vorteilhaften Ausführungsform ist die Intervallpause im Fall von Salz sogar länger als im Fall von Schmutz, da - wie Versuche gezeigt haben - für die Entfernung von Salz eine größere Ansammlung von Sprühwasser auf der Fahrzeugscheibe notwendig ist. Dabei kann die Verlängerung der Intervallpause im Fall von Salz so groß gewählt sein, daß der Fahrer bewusst provoziert wird, seine Wisch-/Waschanlage zu betätigen.

Anhand der beigefügten Zeichnungen soll die Erfindung nachfolgend näher erläutert werden. Es zeigt:
- Figur 1: ein Blockschaltbild der erfindungsgemäßen Scheibenwischanlage,
- Figur 2: den zeitlichen Verlauf des Regenwertes/Benetzungsgrads für eine saubere Scheibe, eine schmutzige Scheibe und eine mit Salz behaftete Scheibe,
- Figur 3: den zeitlichen Verlauf des Sensorsignals zur Erläuterung der Unterscheidung zwischen nur Wasser, Schmutz und Salz.

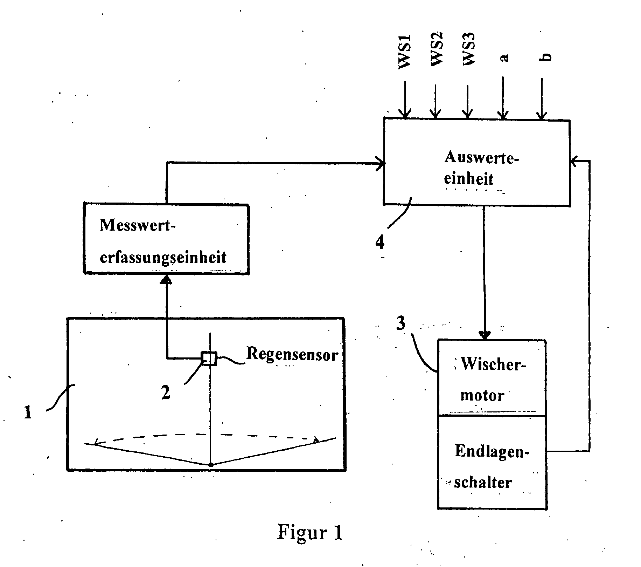

Figur 1 zeigt ein Blockschaltbild einer Scheibenwischanlage mit einer Einrichtung zur Steuerung der Anlage. Herzstück der Steuerung ist ein Regensensor, der innerhalb des Wischfeldes der Fahrzeugscheibe angeordnet ist. Der Regensensor erzeugt in Abhängigkeit von der Benetzung der Fahrzeugscheibe mit Feuchtigkeit ein Sensorsignal. Hier können verschieden Arten von Regensensoren zum Einsatz kommen. In einer bevorzugten Ausführungsform wird ein optisch arbeitender Regensensor eingesetzt, bei dem ein Messstrahl von einem Sender unter einem Winkel der Totalreflexion in die Fahrzeugscheibe eingekoppelt wird. Bei einer sauberen und trockenen Scheibe wird dann die gesamte Strahlung an der Grenzfläche Scheibenaußenseite/Luft zu einem scheibeninnenseitig angeordneten Empfänger totalreflektiert und dort als Sensorsignal detektiert. Eine Benetzung der Fahrzeugscheibe mit Feuchtigkeit führt zu einer Auskopplung von Strahlung und somit zu einer Abnahme des Sensorsignals. Die Abnahme des Sensorsignals ist somit quasi in Maß für den Grad der Benetzung. Je nach Art des Regensensors kann das Sensorsignal allerdings auch mit anwachsender Benetzung zunehmen.

Die analogen Sensorsignale, z.B. Spannungswerte, werden dann einer Messwert-Erfassungseinheit zugeführt, in der diese dann in digitale Werte für die anschließende Weiterverarbeitung umgewandelt werden. Die digitalisierten Sensorsignale werden dann einer Auswerteeinheit zugeführt, wo in Abhängigkeit der Sensorsignale ein Ansteuerungssignal für den Wischermotor erzeugt wird.

In der Auswerteeinheit sind verschiedene Wischschwellwerte (WS1, WS2, WS3) gespeichert, und zwar für den normalen Betrieb bei Benetzung nur mit Wasser (saubere Scheibe), für den Betrieb bei Sprühwasser mit Schmutz und für den Betrieb bei Sprühwasser mit Salz.

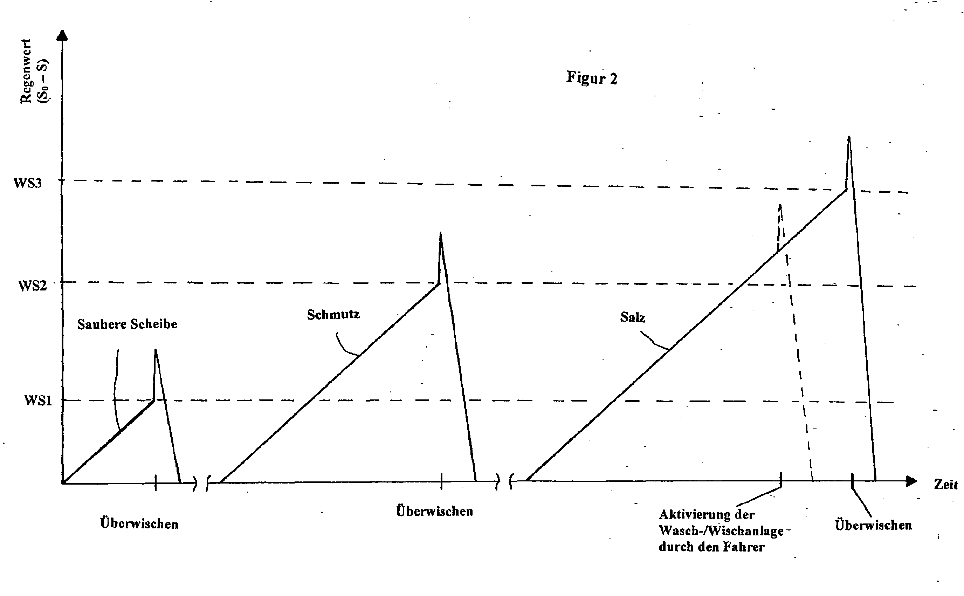

Figur 2 zeigt den zeitlichen Verlauf des Regenwertes und des daraus resultierenden Wischverhaltens in verschiedenen Situationen. Dabei wird unter Regenwert die Differenz zwischen dem Sensorsignal einer trockenen Scheibe (Sₒ -clean and dry level) und dem jeweils aktuellen Sensorsignal (S) bei Benetzung verstanden. Mit zunehmender Benetzung steigt auch der Regenwert.

Bei normalem Betrieb, wenn weder das Vorhandensein von Schmutz noch von Salz erkannt wurde, wird im Intervallbetrieb automatisch der Wischermotor gestartet, wenn der Regenwert einen ersten Wischschwellwert WS1 überschritten hat. Im Augenblick des Überwischens steigt der Regenwert dann kurz sprunghaft etwas an, da das Wischblatt eine größere Menge Wasser vor sich herschiebt, und fällt dann sehr schnell wieder auf Null ab.

Für den Fall, daß das Vorhandensein von Schmutz auf der Fahrzeugscheibe erkannt wurde, wird der Wischermotor erst dann gestartet, wenn der Regenwert eine zweite höhere Wischschwelle WS2 überschritten hat. Im Intervallbetrieb wird durch die höhere Wischschwelle automatisch im Fall von Schmutz auch eine im Vergleich zum Normalbetrieb längere Intervallpause zwischen zwei Wischvorgängen erzielt. Durch die Verzögerung des Wischvorganges wird sichergestellt, daß sich dann, wenn gewischt wird, ausreichend Feuchtigkeit auf der Scheibe befindet, so daß mit dieser Feuchtigkeit dann auch der Schmutz weggewischt wird. Anderenfalls, wenn bei einer Benetzung, die durch Sprühwasser mit Schmutz gebildet wurde, bereits beim Erreichen der Wischschwelle WS1 gewischt würde, wäre die bis dahin angesammelte Wassermenge nicht ausreichend groß, um den Schmutz mit sich wegzuschwemmen. In diesem Fall würde sich ein die Sicht stark beeinträchtigender Schmutzfilm bilden.

Für den Fall, daß das Vorhandensein von Salz auf der Fahrzeugscheibe erkannt wurde, wird der Wischermotor erst dann gestartet, wenn der Regenwert eine dritte noch höhere Wischschwelle WS3 überschritten hat. Im Intervallbetrieb wird durch die höhere Wischschwelle automatisch im Fall von Salz auch eine im Vergleich zum "Schmutzfall" längere Intervallpause zwischen zwei Wischvorgängen erzielt. Durch die Verzögerung des Wischvorganges wird sichergestellt, daß sich dann, wenn gewischt wird, ausreichend Feuchtigkeit auf der Scheibe befindet, so daß mit dieser Feuchtigkeit dann auch das Salz weggewischt wird. Bei Vorliegen von Salz sollte die Intervallpause länger sein als beim Vorliegen von Schmutz, da die Entfernung eines Salzfilmes schwieriger ist und mehr angesammelte Feuchtigkeit benötigt. Dabei ist es durchaus beabsichtigt, daß der Fahrer durch die sehr lange Intervallpause beim Vorliegen von Salz provoziert wird, manuell einen Wisch-/Waschvorgang auszulösen (ein derart vom Fahrer ausgelöster Wisch-/Waschvorgang ist ebenfalls in Figur 2 eingezeichnet).

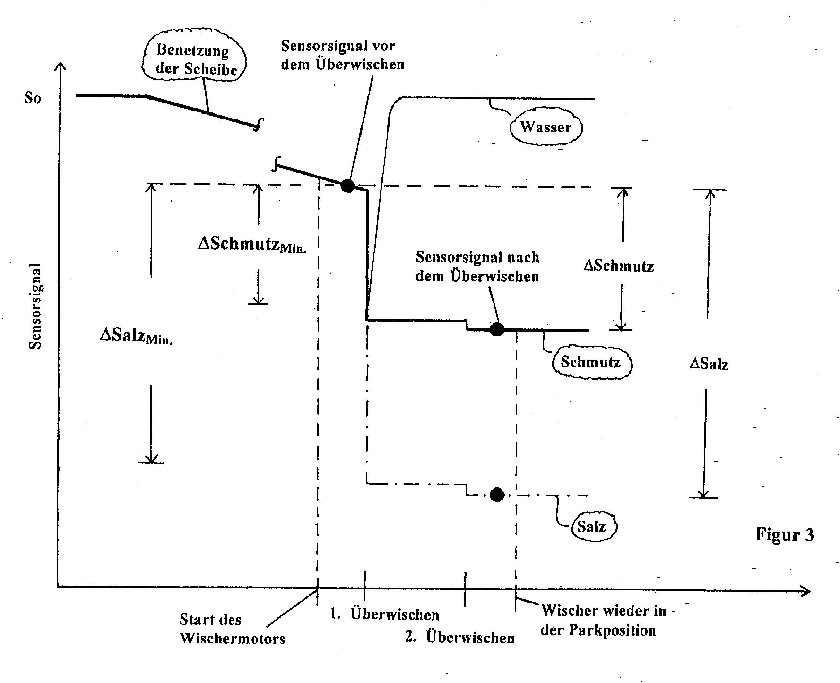

Was ein zu frühes Wischen bei Vorhandensein von Schmutz oder Salz bewirken kann, ist in Figur 3 dargestellt. Dort ist veranschaulicht, wie das Sensorsignal (S) des Regensensors sich nach dem Überwischen bei verschiedenen Arten von Benetzung verhält, wodurch letztendlich auch der Zustand der Fahrzeugscheibe wiedergegeben wird. Der eine Fall bezieht sich auf die Benetzung der Fahrzeugscheibe nur mit Wasser, der andere auf die Benetzung durch Sprühwasser mit Schmutz und der nächste auf die Benetzung durch Sprühwasser mit Salz.

In allen drei Fällen wird, sobald das Sensorsignal (S) aufgrund der zunehmenden Benetzung eine voreingestellte Wischschwelle unterschritten hat, der Wischermotor gestartet, so daß eine gewisse Zeit später auch die Fahrzeugscheibe im Bereich des Regensensors überwischt wird.

Im Fall einer Benetzung nur mit Wasser bricht das Sensorsignal (S) beim Überwischen aufgrund der relativ großen Wassermenge, die das Wischblatt vor sich herschiebt, kurzzeitig ein und steigt dann nach dem Überwischen wieder sehr schnell auf den Wert (S₀) der trockenen und sauberen Scheibe an.
Im Fall einer Benetzung durch Sprühwasser mit Schmutz, bricht das Sensorsignal (S) beim Überwischen ebenfalls ein, jedoch steigt es nach dem Überwischen nicht mehr auf den Wert der trockenen, sauberen Scheibe an. Vielmehr sinkt das Sensorsignal nach dem 2.
Überwischen (Rücklauf des Wischblatts in seine Parkposition) auch ohne eine weitere Benetzung noch ein wenig ab. Dieses Verhalten des Sensorsignals ist darauf zurückzuführen, daß das Wischen aufgrund der zu geringen Wassermenge nicht zu einer Beseitigung des Schmutzes, sondern zu einem Schmutzfilm geführt hat, der ebenfalls für eine starke Auskopplung von Messstrahlung und somit zu einem vergleichsweise niedrigen Sensorsignal (S) führt. Dieser Schmutzfilm kann beeinträchtigt die Sicht des Fahrers jedoch erheblich.

Im Fall einer Benetzung durch Sprühwasser mit Salz, bricht das Sensorsignal (S) beim Überwischen noch stärker ein und steigt nach dem Überwischen nicht mehr an. Dieses Verhalten des Sensorsignals ist ebenfalls darauf zurückzuführen, daß das Wischen aufgrund der zu geringen Wassermenge nicht zu einer Beseitigung des Salzes, sondern zu einem Salzfilm/Salzschleier geführt hat, der für eine noch stärkere Auskopplung von Messstrahlung und somit zu einem vergleichsweise noch niedrigeren Sensorsignal (S) führt. Dieser Salzfilm beeinträchtigt ebenfalls die Sicht des Fahrers erheblich.

Die Erfindung macht sich nun das unterschiedliche Verhalten des Sensorsignals nach dem Überwischen zunutze, um eine Benetzung mit nur Wasser von einer Benetzung durch Sprühwasser mit Schmutz und/oder Salz zu unterscheiden, wobei dann entsprechend auf das Vorhandensein von Schmutz und/oder Salz - wie vorstehend beschrieben - reagiert wird.

Zur Erkennung von Schmutz und/oder Salz wird daher erfindungsgemäß das Sensorsignal vor einem Überwischvorgang mit dem Sensorsignal nach dem nächsten oder übernächsten Überwischvorgang des Wischzyklus verglichen, und anhand des Vergleichsergebnisses in der Auswerteeinheit entschieden wird, ob Schmutz und/oder Salz vorhanden ist.

Dabei wird Schmutz erkannt, wenn das Sensorsignal nach dem Überwischen (S_{N}) kleiner ist als das Sensorsignal vor dem Überwischen (S_{V}) abzüglich einer Differenz zwischen S_{V} und dem Sensorsignal (S₀) für den clean level, welche mit einem Faktor a multipliziert wird; mindestens jedoch muß das Sensorsignal nach dem Überwischen (S_{N}) das Sensorsignal vor dem Überwischen (S_{V}) um eine fest vorbestimmte Mindestdifferenz (ΔSchmutz_{Min.}) unterschreiten. Die vorstehenden Ausführungen beziehen sich auf den dargestellten Fall. Im nicht dargestellten, inversen Fall, wo das Sensorsignal mit zunehmender Benetzung ansteigt, ist "kleiner" durch "größer" zu ersetzen und "unterschreiten" durch überschreiten.

Für eine ordnungsgemäße Schmutzerkennung müssen folgende Bedingungen gleichzeitig erfüllt sein (Und-Verknüfpung):
**1) S**_{**N**}**<S**_{**V**}**-(S**_{**0**}**-S**_{**V**}**)x a**
**2) S**_{**N**} **< S**_{**v**} **- ASchmutz** _{**Min.**}
oder anders ausgedrückt:
**1) S**_{**V**}**- S**_{**N**} **> ΔΔdaptiv ; mit: ΔAdaptiv = (S**_{**0**} **- S**_{**V**}**) x a**
**2) S**_{**V**}**- S**_{**N**} **> ΔSchmutz** _{**Min.**}

**ΔAdaptiv** bezeichnet somit eine adaptive Mindestdifferenz im Unterschied zur fest vorbestimmten Mindestdifferenz **ΔSchmutz** _{**Min**}**.**

Wenn die Scheibe vor dem Wischen nur äußerst geringfügig oder gar nicht benetzt ist, dann ist die adaptive Mindestdifferenz kleiner als die feste Mindestdifferenz. In diesem Fall reicht es nicht aus, wenn das Sensorsignal nach dem Überwischen (**S**_{**N**}) das Sensorsignal vor dem Überwischen (**S**_{**V**}) nur um die adaptive Mindestdifferenz unterschreitet, vielmehr muß das Sensorsignal nach dem Überwischen **(S**_{**N**}**)** das Sensorsignal vor dem Überwischen **(S**_{**V**}**)** auch um die feste Mindestdifferenz unterschreiten. Das Vorsehen einer festen Mindestdifferenz verhindert, daß z.B. im Fall von abdampfenden Schlieren oder bei geringfügigen messtechnisch bedingten Schwankungen des Sensorsignals fälschlicher Weise Schmutz erkannt wird.

Wenn die Scheibe vor dem Wischen bereits leicht benetzt ist, dann ist die adaptive Mindestdifferenz größer als die feste Mindestdifferenz. In diesem Fall reicht es nicht aus, wenn das Sensorsignal nach dem Überwischen (**S**_{**N**}) das Sensorsignal vor dem Überwischen **(S**_{**v**}**)** nur um die feste Mindestdifferenz unterschreitet, vielmehr muß das Sensorsignal nach dem Überwischen das Sensorsignal vor dem Überwischen auch um die adaptive Mindestdifferenz unterschreiten. Falls es regnet, muß zur Schmutzerkennung also auch die größere adaptive Mindestdifferenz unterschritten werden, um nicht fälschlicher Weise zu früh Schmutz zu erkennen.

Salz wird erkannt, wenn das Sensorsignal nach dem Überwischen (S_{N}) kleiner ist als das Sensorsignal vor dem Überwischen (S_{V}) abzüglich einer Differenz zwischen S_{V} und dem Sensorsignal (S₀) für den clean level, welche mit einem Faktor b multipliziert wird; mindestens jedoch muß das Sensorsignal nach dem Überwischen (S_{N}) das Sensorsignal vor dem Überwischen (S_{V}) um einen bestimmten Mindestbetrag (ΔSalz _{Min.} ) unterschreiten. Für eine ordnungsgemäße Salzerkennung müssen folgende Bedingungen gleichzeitig erfüllt sein (Und-Verknüfpung):
**1) S**_{**N**}**<S**_{**V**}**-(S**_{**0**}**-S**_{**V**}**)xb**
**2) S**_{**N**}**<S**_{**V**}**-ΔSalz**_{**Min.**}

Die Faktoren a und b sind vorzugsweise in der Auswerteeinheit gespeichert. Es gilt, daß b > a. Die Werte für die Faktoren a und b können empirisch gefunden werden.

Das Sensorsignal vor dem Überwischen wird vorzugsweise zu einem Zeitpunkt oder Zeitbereich, der nach dem Start des Wischermotors liegt und vor dem ersten Überwischen liegt, ermittelt. Das für den Vergleich erforderliche Sensorsignal nach dem Überwischen wird dann zu einem späteren Zeitpunkt oder Zeitbereich, der nach dem ersten oder dem zweiten Überwischen liegt, ermittelt. Es hat sich herausgestellt, daß die Erkennung von Schmutz und/oder Salz am zuverlässigsten arbeitet, wenn das Sensorsignal nach dem zweiten Überwischen beim Rücklauf des Wischblatts in seine Parkposition ermittelt wird. Da in einigen Fällen das zweite Überwischen doch in der Lage ist, Schmutz und/oder Salz wegzuwischen.

## Patentansprüche

1. Verfahren zum Betrieb einer Einrichtung zur Steuerung einer Scheibenwischanlage (3) für Fahrzeugscheiben (1) mit einem innerhalb des Wischfeldes der Fahrzeugscheibe (1) angeordneten Regensensor (2), der in Abhängigkeit von der Feuchtigkeit auf der Fahrzeugscheibe (1) ein Sensorsignal zur Ansteuerung der Scheibenwischanlage (3) generiert,
- wobei in Abhängigkeit vom Sensorsignal die Intervallpause zwischen zwei Wischvorgängen oder die Wischgeschwindigkeit der Scheibenwischanlage variiert wird,
- wobei in einer Auswerteeinheit (4) anhand der Sensorsignale das Vorhandensein von Schmutz und/oder Salz auf der Fahrzeugscheibe erkannt wird,
- wobei beim Vorhandensein von Schmutz und/oder Salz auf der Fahrzeugscheibe die Intervallpause zwischen zwei Wischvorgängen verlängert wird oder die Wischgeschwindigkeit erniedrigt wird,
**dadurch gekennzeichnet, daß**
zur Erkennung von Schmutz und/oder Salz das Sensorsignal vor einem Überwischvorgang mit dem Sensorsignal nach dem nächsten oder übernächsten Überwischvorgang des Wischzyklus verglichen wird, wobei anhand des Vergleichsergebnisses in der Auswerteeinheit entschieden wird, ob Schmutz und/oder Salz vorhanden ist.

2. Verfahren nach Anspruch 1,
**dadurch gekennzeichnet, daß**
die Intervallpause beim Vorhandensein von Salz länger ist als beim Vorhandensein von Schmutz.

3. Verfahren nach Anspruch 2,
**dadurch gekennzeichnet, daß**
in der Auswerteeinheit mindestens eine Wischschwelle (WS1) für den Fall einer sauberen Scheibe und mindestens eine davon verschiedene zweite Wischschwelle (WS2, WS3) für den Fall, daß Schmutz und/oder Salz auf der Scheibe vorhanden ist, vorgesehen ist, wobei die Scheibenwischanlage (3) automatisch gestartet wird, wenn das Sensorsignal die jeweilige Wischschwelle (WS1, WS2, WS3) überschritten hat oder unterschritten hat.

4. Verfahren nach Anspruch 3,
**dadurch gekennzeichnet, daß**
- eine zweite Wischschwelle (WS2) für den Fall, daß Schmutz auf der Scheibe vorhanden ist, vorgesehen ist,
- eine dritte Wischschwelle (WS3) für den Fall, daß Salz auf der Scheibe vorhanden ist, vorgesehen ist.

5. Verfahren nach Anspruch 1,
**dadurch gekennzeichnet, daß**
die Wischgeschwindigkeit beim Vorhandensein von Salz langsamer ist als beim Vorhandensein von Schmutz.

6. Verfahren nach einem der vorstehenden Ansprüche,
**dadurch gekennzeichnet, daß**
Schmutz erkannt wird, wenn das Sensorsignal nach dem Überwischen das Sensorsignal vor dem Überwischen um mindestens eine Mindestdifferenz überschreitet oder unterschreitet.

7. Verfahren nach einem der vorstehenden Ansprüche,
**dadurch gekennzeichnet, daß**
zur Erkennung von Schmutz und/oder Salz das Sensorsignal zu einem Zeitpunkt oder Zeitbereich, der nach dem Start des Wischermotors liegt und vor dem ersten Überwischen liegt, mit dem Sensorsignal zu einem späteren Zeitpunkt oder Zeitbereich, der nach dem ersten oder dem zweiten Überwischen liegt, verglichen wird.

## Claims

1. Method for operating a control device for a windscreen wiper system (3) for vehicle windscreens (1), having a rain sensor (2) arranged within the wiped area of the vehicle windscreen (1), which generates a sensor signal to activate the windscreen wiper system (3) in dependence on the moisture on the vehicle windscreen (1),
- the interval between two wiping operations or the wiping speed of the windscreen wiper system being varied in dependence on the sensor signal,
- the presence of dirt and/or salt on the vehicle windscreen being recognised in an evaluating unit (4) with the help of the sensor signals,
- the interval between two wiping operations being lengthened or the wiping speed lowered in the event that dirt and/or salt is present on the vehicle windscreen,
**characterised in that**
to recognise dirt and/or salt, the sensor signal before a sweep is compared to the sensor signal following the next or next but one sweep of the wipe cycle, it being decided in the evaluating unit with the help of the comparison result whether dirt and/or salt is present.

2. Method according to claim 1, **characterised in that** the interval is longer when salt is present than when dirt is present.

3. Method according to claim 2, **characterised in that** in the evaluating unit there are provided at least one wipe threshold (WS1) in case the windscreen is clean and at least one second wipe threshold (WS2, WS3), which differs from the first, in case dirt and/or salt is present on the windscreen, the windscreen wiper system (3) being automatically switched on whenever the sensor signal has exceeded the respective wipe threshold (WS1, WS2, WS3) or fallen short thereof.

4. Method according to claim 3, **characterised in that**
- a second wipe threshold (WS2) is provided in case dirt is present on the windscreen,
- a third wipe threshold (WS3) is provided in case salt is present on the windscreen.

5. Method according to claim 1, **characterised in that** the wiping speed is slower in the presence of salt than in the presence of dirt.

6. Method according to any one of the preceding claims, **characterised in that** dirt is recognised whenever the sensor signal after a sweep exceeds or falls short of the sensor signal before a sweep by not less than a minimum margin.

7. Method according to any one of the preceding claims, **characterised in that** to recognise dirt and/or salt the sensor signal at an instant or in a time frame elapsing after the wiper motor is switched on and before the first sweep is compared to the sensor signal at a subsequent instant or in a subsequent time frame elapsing after the first or the second sweep.

## Revendications

1. Procédé pour le fonctionnement d'un dispositif de commande d'un système d'essuie-glace (3) pour des vitres de véhicule (1) avec un capteur de pluie (2) disposé à l'intérieur du champ d'essuyage de la vitre (1) générant un signal de capteur en fonction de l'humidité sur la vitre (1) pour la commande du système d'essuie-glace (3),
- l'intervalle de pause entre deux passages d'essuie-glace ou la vitesse du système d'essuie-glace variant en fonction du signal du capteur,
- la présence de saleté et/ou de sel sur la vitre du véhicule étant détectée dans une unité d'évaluation (4) à partir des signaux du capteur,
- l'intervalle de pause entre deux passages d'essuie-glace, ou la vitesse d'essuyage étant réduits en cas de présence de saleté et/ou de sel sur la vitre du véhicule,
**caractérisé en ce que**
pour la détection de saleté et/ou de sel, le signal de capteur avant un essuyage est comparé au signal de capteur délivré suite au premier ou au deuxième essuyage du cycle d'essuyage, la présence de saleté et/ou de sel étant confirmée sur la base des résultats de comparaison dans l'unité d'évaluation.

2. Procédé selon la revendication 1,
**caractérisé en ce que** l'intervalle de pause est plus long en cas de présence de sel qu'en cas de présence de saleté.

3. Procédé selon la revendication 2,
**caractérisé en ce qu'**un seuil d'essuyage (WS1) au moins est prévu dans l'unité d'évaluation en cas de vitre propre, ainsi qu'un deuxième seuil d'essuyage (WS2, WS3) au moins, différent du premier en cas de présence de saleté et/ou de sel sur la vitre, le système d'essuie-glace (3) étant automatiquement démarré si le signal de capteur dépasse le seuil d'essuyage respectif (WS1, WS2, WS3) ou repasse sous celui-ci.

4. Procédé selon la revendication 3,
**caractérisé**
- **en ce qu'**un deuxième seuil d'essuyage (WS2) est prévu en cas de présence de saleté sur la vitre,
- et un troisième seuil d'essuyage (WS3) en cas de présence de sel sur la vitre.

5. Procédé selon la revendication 1,
**caractérisé en ce que**
la vitesse d'essuyage est plus lente en cas de présence de sel qu'en cas de présence de saleté.

6. Procédé selon l'une des revendications précédentes,
**caractérisé en ce que**
la saleté est détectée si le signal de capteur après essuyage dépasse le signal de capteur avant essuyage ou est inférieur à celui-ci d'une différence minimale au moins.

7. Procédé selon l'une des revendications précédentes,
**caractérisé en ce que** pour la détection de saleté et/ou de sel, le signal de capteur à un moment ou dans une plage temporelle suivant le démarrage du moteur d'essuie-glace et précédant le premier essuyage est comparé au signal de capteur délivré à un moment ou dans une plage temporelle ultérieurs, consécutifs au premier ou au deuxième essuyage.
